# FASCICULE DE BREVET EUROPEEN

(11) **EP 2 039 207 B1**
(45) Date de publication et mention de la délivrance du brevet: **24.04.2013**
(21) Numéro de dépôt: 07803806.4
(22) Date de dépôt: 28.06.2007
(51) Int. Cl.: H04W 8/06

(54) **REDIRECTION DE TRAFIC DANS UN RESEAU DE TELEPHONIE MOBILE**
VERKEHRSUMLEITUNG IN EINEM MOBILFUNKNETZ
REDIRECTING TRAFFIC IN A MOBILE TELEPHONE NETWORK

(30) Priorité: 06.07.2006 FR 0606174
(43) Date de publication de la demande: 25.03.2009
(73) Titulaire: Bouygues Telecom, 75008 Paris (FR)
(72) Inventeur: FOUQUET, Matthieu, 92190 Meudon (FR)
(74) Mandataire: Regimbeau
(86) Numéro de dépôt international: PCT/FR2007/001097
(87) Numéro de publication internationale: WO 2008/003848

(56) Documents cités:
- EP-A- 1 463 366
- WO-A-00/79827
- WO-A-01/95655
- WO-A-02/069660
- WO-A-2005/107281

## Description

La présente invention se rapporte à un dispositif et à procédé ainsi qu'à une architecture réseaux, pour la redirection de trafic au sein d'un réseau de téléphonie mobile.

De nombreux réseaux de téléphonie mobile offrent aujourd'hui un service d'itinérance, permettant à un utilisateur, lorsqu'il y a souscrit, de continuer à bénéficier de services de téléphonie lors de ses déplacements à l'étranger. Ainsi, il a la possibilité d'utiliser n'importe quels réseaux de téléphonie mobile sans critère spécifique d'ordre tarifaire ou relatif à une meilleure liaison, et ce de manière totalement aléatoire. Pour des raisons commerciales, certains opérateurs ont mis en place des dispositifs et procédés de redirection de trafic afin de privilégier la localisation de leurs abonnés en itinérance dans un pays, pour qu'ils soient amenés à utiliser les services fournis par un opérateur plutôt qu'un autre.

L'art antérieur connaît à ce titre un dispositif tel que décrit dans la demande de brevet EP1463366 relative à un service d'itinérance, qui s'inscrit dans une architecture de téléphonie mobile comprenant un réseau HPLMN, acronyme anglais pour un réseau mobile d'appartenance de l'utilisateur, et VPLMN, pour un réseau mobile visité par un utilisateur n'appartenant pas à ce réseau, reliés tous deux par un réseau de transport SS7 qui est un réseau de signalisation sémaphore Code 7. Ce réseau HPLMN comprend une unité de préférence. Cette unité de préférence sonde les échanges de données entre le réseau visité et le réseau d'apartenance de l'utilisateur c'est-à-dire qu'il filtre les échanges de données entre un HLR, acronyme anglais pour un équipement qui contient les données relatives à un client, et un MSC/VLR, équipement de commutation qui contient les données de l'utilisateur sous sa zone de couverture transmises par le HLR. Ainsi il capture une requête de localisation émise par le MSC/VLR du réseau visité VPLMN vers le HLR du réseau d'appartenance de l'utilisateur HPLMN. Cette unité de préférence comprend une base de données qu'il consulte afin de vérifier que le réseau fait partie de sa liste des réseaux préférés. Si c'est le cas, il transmettra la requête de localisation capturée au HLR, sinon cette unité de préférence émettra une réponse négative à la requête de localisation en direction du MSC/VLR. À réception de cette réponse négative le MSC/VLR refusera la connexion au terminal mobile qui tentera alors de se connecter à partir d'un autre réseau VPLMN. De cette façon, l'unité de préférence va donc rediriger le trafic et pourra envoyer: un message positif au MSC/VLR lors d'une autre connexion par le terminal mobile à un réseau VPLMN référencé comme partenaire par cette unité de préférence, voire en cas de non existence d'accord de roaming.

On connait également du document WO 00/79827 A1 un dispositif et un procédé pour rediriger le trafic au sein d'un réseau de téléphonie.

L'inconvénient d'un tel dispositif est de ne pouvoir rediriger le trafic lorsqu'il y a un problème d'interfonctionnement entre les réseaux VPLMN et HPLMN, car dans un tel contexte l'unité de préférence, équipement gérant la redirection du trafic, ne serait plus en contact avec le réseau visité.

La présente invention entend remédier aux inconvénients de l'art antérieur. Un but de l'invention est d'assurer une continuité de service à un terminal mobile même en cas de problème d'interfonctionnement entre les réseaux HPLMN et VPLMN.

Pour ce faire, la présente invention a tout d'abord pour objet une architecture réseau de téléphonie mobile comprenant au moins un premier réseau d'appartenance, et un deuxième réseau de visite, ledit réseau de visite comprenant au moins un équipement de commutation de visite, ledit réseau d'appartenance comprenant au moins un équipement de commutation d'appartenance, ledit équipement de commutation de visite étant apte à recevoir des données relatives à un utilisateur dans ledit réseau de visite et à transmettre lesdites données audit équipement de commutation d'appartenance, ledit équipement de commutation d'appartenance étant apte à enregistrer lesdites données et à authentifier et localiser ledit utilisateur en fonction desdites données, ladite architecture comprenant un équipement intermédiaire positionné dans ledit réseau de visite, ledit équipement intermédiaire comprenant :
- des moyens de réception agencés pour recevoir lesdites données dudit équipement de commutation de visite;
- des moyens d'enregistrement agencés pour enregistrer lesdites données ;
- des moyens de demande de connexion agencés pour émettre une requête audit équipement de commutation d'appartenance à partir desdites données ;
- des moyens de simulation de connexion agencés pour fournir audit équipement de commutation de visite, une autorisation de connexion dudit utilisateur audit réseau de visite.

Cette architecture réseau propose dans sa configuration l'avantage de comprendre au sein du réseau de visite un équipement intermédiaire par lequel transitent tous les échanges de données entre les équipements de commutation du réseau de visite et d'appartenance. La position de cet équipement et les moyens qu'il comporte lui permettent en cas de problème d'interfonctionnement de pouvoir assurer une continuité de service.

L'invention a aussi pour objet un procédé pour la gestion d'une architecture réseau selon la revendication 2.

Dans un mode de réalisation, il comprend, en cas d'échec d'authentification par ledit équipement de commutation d'appartenance suite à ladite requête, une étape consistant à :
- analyser lesdites données reçues au niveau dudit équipement intermédiaire.
- autoriser l'authentification.

Cette étape permet à un utilisateur du réseau de visite de pouvoir bénéficier d'un service de téléphonie mobile alors que l'authentification de son terminal mobile n'est pas possible, suite par exemple à la non disponibilité de l'équipement de commutation du réseau d'appartenance. C'est l'équipement intermédiaire qui autorise alors l'authentification.

Dans un autre mode de réalisation, il comprend, en cas d'échec de localisation par ledit équipement de commutation d'appartenance suite à ladite requête, une étape consistant à :
- analyser lesdites données reçues au niveau dudit équipement intermédiaire ;
- autoriser la localisation.

Cette étape permet à un utilisateur du réseau de visite de pouvoir bénéficier d'un service de téléphonie mobile alors que la localisation de son terminal mobile n'a pas pu être possible. C'est l'équipement intermédiaire qui autorise alors la localisation.

L'invention a aussi pour objet un équipement intermédiaire compris dans une architecture de réseau de téléphonie mobile selon la revendication 5.

Cet équipement intermédiaire présente l'avantage à partir des moyens qu'il comprend de pouvoir se substituer au commutateur du réseau de visite, mais aussi au commutateur du réseau d'appartenance et de pouvoir ainsi assurer un service de téléphonie mobile en cas de problème d'interfonctionnement.

On définit maintenant un mode de réalisation de l'invention en référence aux figures annexées :

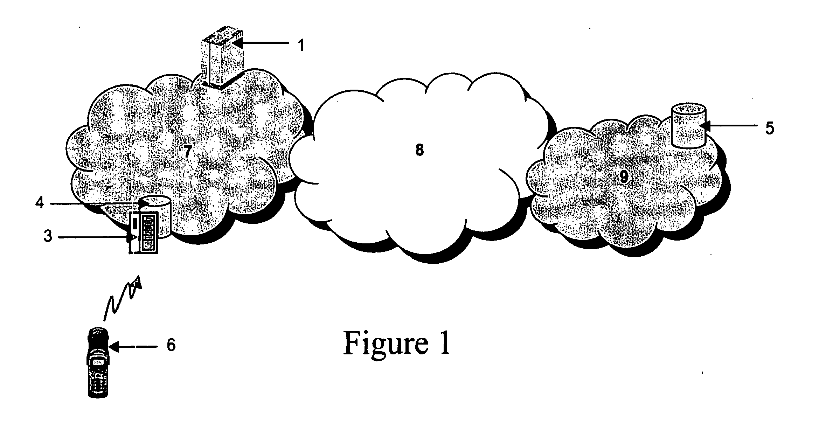

- la figure 1 illustre l'architecture d'un réseau de téléphonie mobile;
- la figure 2 illustre un mode de réalisation de l'invention ;

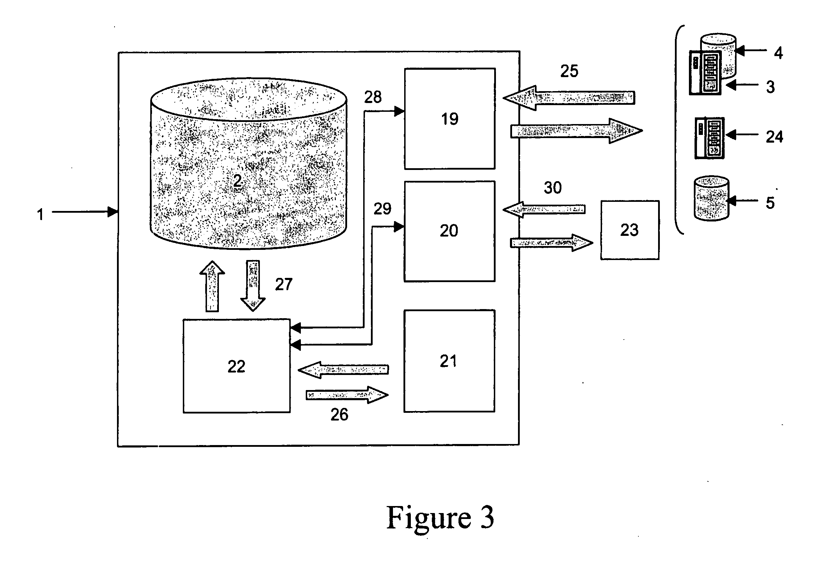

- la figure 3 représente l'équipement de commutation intermédiaire, le HLR Tampon ;
- la figure 4 illustre un mode de fonctionnement de l'invention.

Dans un mode de réalisation, l'invention se rapporte à une architecture d'itinérance d'un réseau de téléphonie mobile. Cette architecture comprend des réseaux HPLMN et VPLMN acronymes anglais correspondant respectivement à un réseau d'appartenance 9 d'un utilisateur et à un réseau visité 7 par un utilisateur.

De plus cette architecture comprend un réseau de transport SS7 8 (réseau de signalisation sémaphore Code 7) qui fait la liaison entre les réseaux HPLMN 9 et VPLMN 7.

Ce réseau HPLMN 9 comporte un ensemble d'équipements GSM, acronyme correspondant à une norme numérique de seconde génération pour la téléphonie mobile. Parmi ces équipements figure un HLR 5 (Home Location Register) qui est un équipement de commutation. Ce HLR 5 comprend des moyens tels qu'une base de données lui permettant d'y stocker les données relatives à tout utilisateur autorisé à utiliser le réseau HPLMN 7. Ces données se rapportent au profil de l'utilisateur. Elles correspondent notamment :
- au numéro IMSI (International Mobile Subscriber Identity) qui est un numéro unique stocké dans la carte SIM du terminal mobile, permettant à un réseau GSM ou UMTS d'identifier un utilisateur,
- au numéro IMEI (International Mobile Equipment Identity), qui est un numéro d'identification propre à chaque terminal mobile,

- à la localisation de l'utilisateur, à partir des adresses du MSC/VLR 3,4 permettant de savoir à chaque instant la position approximative de l'utilisateur,
- aux droits et services de l' utilisateur,
- les données d'authentification, tels que les algorithmes d'authentification, les clefs d'authentification, les triplés ou quintuplés d'authentification.

Le réseau HPLMN 7 peut, le cas échéant, comprendre un équipement d'authentification AuC (Authentication Center) qui, lorsqu'il n'est pas inclus dans le HLR 5, gère les données d'authentification mentionnées ci-dessus.

Ce HLR 5 sert de référant aux autres bases de données locales comme le VLR 3 par exemple.

D'autre part le réseau HPLMN 7 comprend un équipement de transfert des messages SS7, nommé PTS (Point de Transfert Sémaphore).

Le réseau VPLMN 7 comprend en outre un MSC 3 (Mobile services Switching Center ou Mobile Switching Center). Cet MSC 3 est un équipement de commutation qui est en charge du routage, de l'interconnexion avec d'autres réseaux (réseau téléphonique classique par exemple) et de la coordination des appels. Il est très souvent associé à un VLR 4. Ce VLR 4 (Visited Location Register) est un équipement GSM qui correspond à une base de données temporaire. Cet équipement contient en effet toutes les données se rapportant à l'utilisateur qui est compris dans sa zone de couverture, et qui ont été transmises par le HLR 5. Ces données sont utilisées par le MSC 3 auquel ce VLR 4 est rattaché et ils correspondent pour l'essentiel au numéro IMSI (International Mobile Subscriber Identity), à l'adresse du MSC, à l'adresse du HLR, au MSISDN (Mobile Susbscriber Integrated Service Digital Number) et aux données relatives au service de l'utilisateur. Par la suite on parlera de MSC/VLR 3,4 en tant qu'élément de commutation de visite.

Ce réseau VPLMN 7 comprend aussi un HLR tampon 1. Cet HLR Tampon 1 est un équipement GSM intermédiaire qui présente des moyens de connexion entre le HLR 5 du réseau HPLMN 9 et les MSC/VLR 3,4 du réseau VPLMN 7.

Cet équipement intermédiaire 1 ou HLR tampon 1 comprend :
- un module d'interface de signalisation SS7 19 pour les échanges 25 avec des équipements tels que MSC/VLR 3,4, HLR 5 et PTS 24 ;
- un module d'interface IP 20 (Internet Protocol), qui est un protocole Internet, pour les échanges 30 de données avec des équipements 23 raccordés sur des réseaux IP tel que les équipements pour des protocoles de téléphonie mobile de 3^{ième} génération comme l'UMTS (Universal Mobile Telecomunications System) ou HSDPA (High Speed Downlink Packet Access) ou des équipements de supervision ;
- une ou plusieurs bases de données 2 pour stocker, entre autre, les données utilisateurs ou les différentes tables de paramétrage ;
- une architecture physique 22 comprenant, entre autre, un ou plusieurs processeurs, des mémoires volatiles et non volatiles, et des bus d'interface aptes à faire fonctionner le système ;
- un module applicatif comprenant le système d'exploitation 21 sur lequel sont installés des logiciels comportant des mécanismes d'analyse et de service du HLR Tampon 1.

Les modules d'interfaces de signalisation SS7 19 et IP 20 sont administrés par le module applicatif 21 au travers d'échanges lors de la phase 26, via l'architecture physique 22 sur laquelle ces deux interfaces sont reliées et échangent dans des phases 28, 29 des données. La base de données 2 est administrée de la même façon par le module applicatif 21, en envoyant et recevant des données au travers d'échanges lors de la phase 27.

Le HLR tampon 1 dispose des différents protocoles d'échanges utilisés par les réseaux mobiles comme le MAP (Mobile Application Part) et, est capable, lors de mise à jour, d'utiliser d'autres protocoles d'échanges.

Quand un utilisateur muni de son terminal mobile, se trouve sous la couverture d'une cellule du réseau de visite, il est localisé par le MSC/VLR 3,4 gérant la responsabilité de cette cellule.

Dans une première étape, le terminal mobile 6 envoie une requête de localisation au MSC/VLR 3,4 avec les identifiants IMEI et IMSI. Le MSC/VLR 3,4 va réutiliser l'IMSI et construire un message d'authentification. Ce message d'authentification permet de vérifier l'identité de la carte SIM auprès de l'opérateur d'origine de l'utilisateur. Une fois construit, ce message d'authentification est envoyé au HLR Tampon 1. Le HLR Tampon 1 va analyser ce message et enregistrer dans sa base de données 2, entre autre l'IMSI et le numéro de transaction (numéro de transaction TCAP qui est un protocole binaire du réseau SS7), avant de retransmettre ce message au HLR 5 appartenant au réseau HPLMN 9. À réception de ce message, le HLR 5 effectue un contrôle. Si l'utilisateur appartient bien à ce réseau HPLMN 9 alors le HLR 5 émet une réponse positive d'authentification au HLR Tampon 1. Les données de cette requête d'authentification sont alors stockées dans la base de données 2 du HLR Tampon 1. Précisons qu'à cette étape, l'intégralité des données transmises par le HLR 5 est stockée dans le HLR tampon 1 comme le ferait le VLR 4, avant d'être transmise au MSC/VLR 3,4.

Dans une étape suivante, après l'authentification de l'utilisateur, le MSC/VLR 3,4 va construire un message de demande de localisation qui va emprunter la même voie que celle prise par le message d'authentification et passe par les mêmes étapes. À la réception du message de localisation, le HLR 5 vérifie que l'utilisateur a le droit de se localiser en itinérance et transmet alors au HLR Tampon 1 les données relatives aux services et les droits rattachés à l'utilisateur. Le HLR Tampon 1 stocke alors l'intégralité de ces éléments et les transmet par la suite au MSC/VLR 3,4. Ces données sont stockées par le MSC/VLR 3,4 et le service de téléphonie mobile est alors activé. On rappelle que pour chaque échange qui transite par le HLR tampon 1, ce dernier met à jour sa base de données 2 avec les données relatives aux échanges les plus récents.

De manière générale le HLR tampon 1 enregistre dans sa base de données 2 les informations relatives au profil de l'utilisateur de la même façon que le fait le HLR 5 pour les données d'authentification, IMSI, MSISDN, adresse du VLR, les droits de l'utilisateur, les restrictions et d'autres données citées précédemment.

Dans le mode de réalisation précédent, en cas d'incident survenant sur les différents réseaux HPLMN 9, VPLMN 7 ou de transport 8, le HLR 5 peut n'être plus joignable. Dans un tel cas le HLR tampon 1 prend le relais.

En effet le HLR Tampon 1 dispose de moyens lui permettant d'effectuer toutes les procédures d'authentification et de localisation comme le ferait un HLR 5 ou un MSC/VLR 3,4. Il peut ainsi assurer une continuité de service d'itinérance. Dans cette situation une étape supplémentaire consiste à renouveler de manière périodique des demandes d'authentification et de localisation issues du MSC/VLR 3,4 en direction du HLR 5 afin de rétablir la connexion. Le nombre de tentatives est paramétrable, mais est généralement de l'ordre de cinq. Dans ce cas, le HLR tampon 1 se substitue au HLR 5 du réseau HPLMN 9 en répondant au MSC/VLR 3,4 avec les données précédemment stockées lors des échanges avec le HLR 5 pour cet utilisateur. Il est aussi possible dans ce contexte de définir des paramètres d'application se rapportant à une catégorie d'utilisateurs, ou à la mise à disposition d'un service restreint ou non. On peut aussi définir la durée durant laquelle le HLR tampon 1 peut se substituer au réseau HPLMN 9 et bien d'autres paramètres.

Ce mécanisme peut s'appliquer à un utilisateur qui a déjà été localisé sur le réseau VPLMN 7 en réutilisant son profil provenant du HLR 5 enregistré dans la base de données 2 du HLR Tampon 1 ou à un utilisateur inconnu de ce réseau en lui appliquant un profil par défaut avec plus ou moins de restriction et en supprimant la phase d'authentification de l'utilisateur depuis le MSC/VLR 3,4.

Dans un autre mode de réalisation, le réseau HPLMN 9 peut être rendu injoignable par la réception de réponses négatives apportées lors de l'étape de localisation. Ces réponses peuvent émaner de systèmes de redirection de trafic reposant sur la manipulation de messages SS7, comme par exemple des refus de localisation avec une cause d'erreur « unexpected data value »(Message normalisé dans la norme ETSI TS 029.002). Dans ce contexte, l'étape d'authentification peut se faire normalement avec le HLR 5. Dans un tel cas, on a une étape de renouvellement de requêtes de demande d'authentification et de localisation par le HLR Tampon 1. La durée espaçant le rejet et le renouvellement de telles demandes peut être paramétrée. Cette durée est généralement de l'ordre de dix huit secondes. Il est possible de paramétrer cette durée pour simuler une localisation manuelle ou une zone de couverture unique d'un VPLMN 7. D'autre part le HLR tampon 1 peut être paramétré pour, dans certains cas, reconstruire et envoyer des messages de localisation depuis les éléments de sa base de données comme l'IMSI et l'adresse du MSC/VLR 3,4. Un des paramétrages pouvant être appliqué est celui du changement de plan d'adressages en remplaçant le plan E.214 par E.164 du protocole de communication SCCP (Signaling Connection and Control Part). Le but étant de contourner le mode de routage des messages de localisation du HPLMN 9 de son système de redirection pour arriver à se connecter directement sur le HLR 5 du HPLMN 9. Ainsi la connexion au HLR 5 sera alors possible et les étapes d'authentification et de localisation seront effectuées. L'utilisateur bénéficiera alors d'une offre de téléphonie mobile et donc d'une continuité de service.

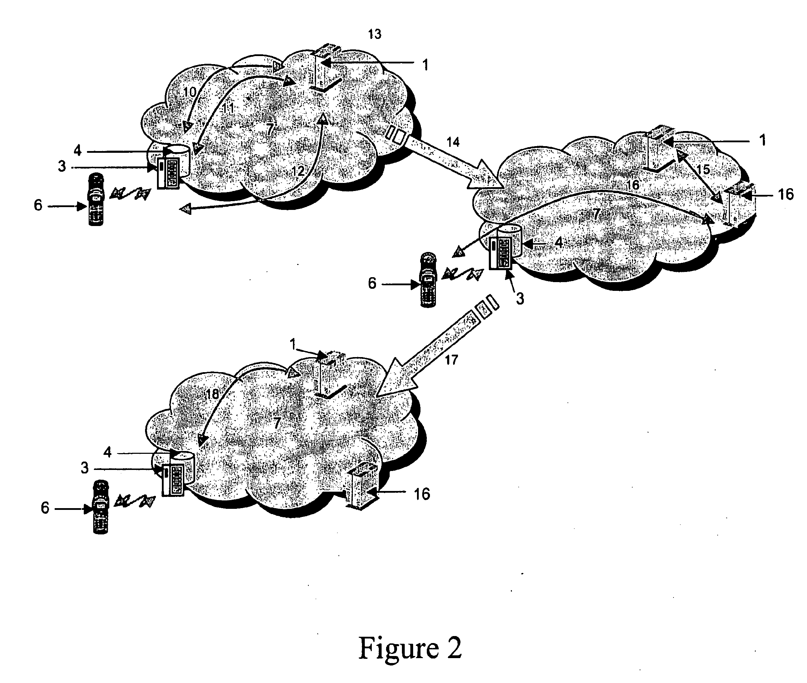

Dans la figure 2 un autre mode de réalisation est décrit. Il se rapporte à une situation dans laquelle la connexion au réseau HPLMN 9 est impossible et les étapes d'authentification et de localisation ne sont pas satisfaites. Le HLR Tampon 1 peut autoriser la connexion d'un terminal mobile 6 sur la base des numéros IMEI et IMSI récupérés par le MSC/VLR 3,4. Dans ce cas, la phase d'authentification est rendue inexistante. Le MSC/VLR 3,4 demande directement la localisation au HLR Tampon 1 à la phase 10. Ce dernier accepte la localisation avec restriction de tous les services à la phase 11, sauf la réception de SMS. Le HLR tampon 1 obtient l'IMEI du terminal mobile 6 à la phase 12 soit directement dans la demande de localisation du MSC/VLR 3,4 soit en interrogeant le MSC/VLR 3,4 avec un message du protocole MAP approprié, comme par exemple « Provide Subscriber Info ». Ces numéros d'identifiants IMSI et IMEI sont enregistrés dans sa base de données 2 à la phase 13 et lui permettent d'activer le service à la phase 14, sur la base de ces deux éléments. Le HLR tampon 1, envoie un message court de type SMS (Service de Message Court) via une interconnexion à un équipement qui gère le transfert de ces messages le SMS-C 16 (Short Message Service Center) à la phase 15. L'utilisateur reçoit le SMS lui indiquant la procédure à suivre pour souscrire au service à la phase 16. Après souscription et activation du service à la phase 17, le HLR tampon 1 met à jour les données du VLR 4 à la phase 18, en levant les restrictions et en attribuant un MSISDN dans une tranche du réseau VPLMN 7 et un profil correspondant au service souscrit.

L'utilisateur pourra ainsi se voir proposer un numéro de téléphone attribué temporairement et peut ainsi recevoir des appels ou des SMS et avoir la possibilité d'en émettre. L'utilisateur bénéficie ainsi d'une continuité de service d'itinérance.

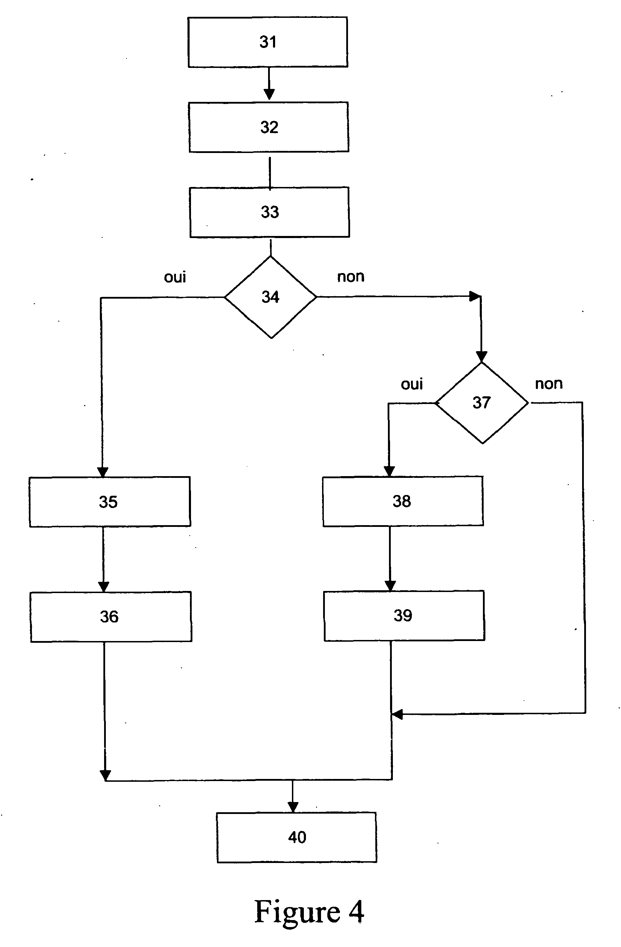

À la figure 4, à l'étape de réception 31 l'équipement intermédiaire 1 reçoit des données de l'équipement de commutation de visite 3,4. Ces données sont enregistrées dans la base de données 2 de cet équipement intermédiaire 1 à l'étape d'enregistrement 32. À partir de ces données, il émet une requête vers l'équipement de commutation d'appartenance 5 à l'étape d'émission d'une requête 33. En cas d'échec de l'authentification 34 par l'équipement de commutation d'appartenance 5, l'équipement intermédiaire 1 analyse les données qu'il a reçues à l'étape d'analyse de données reçues 35 et autorise l'authentification de l'utilisateur à l'étape d'autorisation d'authentification 36 avec plus ou moins de restrictions en fonction des résultats de l'analyse des données. S'il y a par contre une authentification mais un échec au niveau de la localisation 37 par l'équipement de commutation d'appartenance 5, il y a une étape d'analyse de données reçues 38 par l'équipement intermédiaire 1 et ensuite une étape d'autorisation de localisation 39. Après les étapes 39 et 36, et lorsqu'il n'y a pas d'échec de localisation, l'équipement de commutation intermédiaire 1 fournit à l'équipement de commutation de visite 3,4, à l'étape 40, une autorisation de connexion de l'utilisateur au réseau de visite.

Ainsi à partir du HLR tampon, l'utilisateur peut être systématiquement localisé et bénéficier ainsi des différents services de téléphonie mobile.

Il est entendu que l'invention peut s'inscrire dans toutes types de réseaux de téléphonie mobile comme notamment les réseaux sous protocole de communication GPRS (General Packet Radio Service), UMTS ou HSDPA.

## Revendications

1. Architecture réseau de téléphonie mobile comprenant au moins un premier réseau d'appartenance (9), et un deuxième réseau de visite (7), ledit réseau de visite (7) comprenant au moins un équipement de commutation de visite (3,4), ledit réseau d'appartenance (9) comprenant au moins un équipement de commutation d'appartenance (5), ledit équipement de commutation de visite (3,4) étant apte à recevoir des données relatives à un utilisateur dans ledit réseau de visite (7) et à transmettre lesdites données audit équipement de commutation d'appartenance (5), ledit équipement de commutation d'appartenance (5) étant apte à enregistrer lesdites données et à authentifier et localiser ledit utilisateur en fonction desdites données, ladite architecture comportant un équipement intermédiaire comprenant :
- des moyens de réception (19) agencés pour recevoir lesdites données dudit équipement de commutation de visite (3,4);
- des moyens d'enregistrement (2) agencés pour enregistrer lesdites données ;
**caractérisée en ce que** ledit équipement intermédiaire (1) est positionné dans ledit réseau de visite (7) et comprend :
- des moyens de demande de connexion (19,21,22) agencés pour émettre une requête audit équipement de commutation d'appartenance (5) à partir desdites données, et
- des moyens d'autorisation de connexion agencés pour autoriser une connexion audit équipement de commutation de visite (3,4), en fonction d'une réponse reçue par ledit équipement intermédiaire suite à l'émission de ladite requête.

2. Procédé pour la gestion d'une architecture réseau de téléphonie mobile, ladite architecture comprenant au moins un premier réseau d'appartenance (9), et un deuxième réseau de visite (7), ledit réseau de visite (7) comprenant au moins un équipement de commutation de visite (3,4), ledit réseau d'appartenance (9) comprenant au moins un équipement de commutation d'appartenance (5), ledit équipement de commutation de visite (3,4) étant apte à recevoir des données d'un utilisateur dans ledit réseau de visite (7) et à transmettre lesdites données audit équipement de commutation d'appartenance (5), ledit équipement de commutation d'appartenance (5) étant apte à enregistrer lesdites données et à authentifier et localiser ledit utilisateur en fonction desdites données, l'architecture comprenant un équipement intermédiaire (1) positionné dans ledit réseau de visite (7) ledit procédé comprend des étapes mises en oeuvre par l'équipement intermédiaire (1) consistant à :
- recevoir lesdites données dudit équipement de commutation de visite (3,4);
- enregistrer lesdites données ; ledit procédé étant **caractérisé en ce qu'**il comprend aussi des étapes consistant à
- émettre une requête audit équipement de commutation d'appartenance (5) à partir desdites données ;
- fournir audit équipement de commutation de visite (3,4), une autorisation de connexion dudit utilisateur audit réseau de visite (7).

3. Procédé selon la revendication 2 comprenant, en cas d'échec d'authentification par ledit équipement de commutation d'appartenance (5) suite à ladite requête, une étape consistant à :
- analyser lesdites données reçues au niveau dudit équipement intermédiaire (1);
- autoriser l'authentification.

4. Procédé selon la revendication 2 comprenant, en cas d'échec de localisation par ledit équipement de commutation d'appartenance (5) suite à ladite requête, une étape consistant à :
- analyser lesdites données reçues au niveau dudit équipement de commutation intermédiaire (1);
- autoriser la localisation.

5. Equipement intermédiaire compris dans une architecture réseaux de téléphonie mobile comprenant au moins un premier réseau d'appartenance (9), et un deuxième réseau de visite (7), ledit réseau de visite (7) comprenant au moins un équipement de commutation de visite (3,4), ledit réseau d'appartenance (9) comprenant au moins un équipement de commutation d'appartenance (5), ledit équipement de commutation de visite (3, 4) étant apte à recevoir des données relatives à un utilisateur dans ledit réseau de visite (7) et à transmettre lesdites données audit équipement de commutation d'appartenance (5), ledit équipement de commutation d'appartenance (5) étant apte à enregistrer lesdites données et à authentifier et localiser ledit utilisateur en fonction desdites données, ledit équipement intermédiaire (1) comprend :
- des moyens de réception (19) agencés pour recevoir lesdites données dudit équipement de commutation de visite (3,4);
- des moyens d'enregistrement (2) agencés pour enregistrer lesdites données ; ledit équipement intermédiaire (1) **caractérisé en ce qu'**il comprend aussi
- des moyens de demande de connexion (19,21,22) agencés pour émettre une requête audit équipement de commutation d'appartenance (5) à partir desdites données ;
- des moyens d'autorisation de connexion agencés pour autoriser une connexion audit équipement de commutation de visite (3, 4) d'une réponse reçue suite à l'émission de ladite requête

## Claims

1. Mobile telephone network architecture comprising at least one first home network (9) and a second visited network (7), said visited network (7) comprising at least one visited switching device (3, 4), said home network (9) comprising at least one home switching device (5), said visited switching device (3, 4) being capable of receiving data relating to a user in said visited network (7) and of transmitting said data to said home switching device (5), said home switching device (5) being capable of recording said data and authenticating and tracking said user on the basis of said data, said architecture comprising an intermediate device comprising:
- reception means (19) devised to receive said data from said visited switching device (3, 4);
- recording means (2) devised to record said data;
**characterised in that** said intermediate device (1) is positioned in said visited network (7) and comprises:
- connection request means (19, 21, 22) devised to send a request to said home switching device (5) on the basis of said data, and
- connection authorisation means devised to authorise a connection to said visited switching device (3, 4), on the basis of a response received by said intermediate device following the sending of said request.

2. Method of managing a mobile telephone network architecture, said architecture comprising at least one first home network (9) and a second visited network (7), said visited network (7) comprising at least one visited switching device (3, 4), said home network (9) comprising at least one home switching device (5), said visited switching device (3, 4) being capable of receiving data from a user in said visited network (7) and of transmitting said data to said home switching device (5), said home switching device (5) being capable of recording said data and of authenticating and tracking said user on the basis of said data, the architecture comprising an intermediate device (1) positioned in said visited network (7), said method comprising steps implemented by the intermediate device (1) consisting of:
- receiving said data from said visited switching device (3, 4);
- recording said data; said method being **characterised in that** it also comprises steps consisting of
- sending a request to said home switching device (5) on the basis of said data;
- supplying said visited switching device (3, 4) with an authorisation to connect said user to said visited network (7).

3. Method according to claim 2 comprising, in the event of an authentication failure by said home switching device (5) following said request, a step comprising:
- analysing said data received by said intermediate device (1);
- authorising the authentication.

4. Method according to claim 2 comprising, in the event of a tracking failure by said home switching device (5) following said request, a step comprising:
- analysing said data received by said intermediate switching device (1);
- authorising the tracking.

5. Intermediate device comprised within a mobile telephone network architecture including at least one first home network (9) and a second visited network (7), said visited network (7) comprising at least one visited switching device (3, 4), said home network (9) comprising at least one home switching device (5), said visited switching device (3, 4) being capable of receiving data relating to a user within said visited network (7) and of transmitting said data to said home switching device (5), said home switching device (5) being capable of recording said data and of authenticating and tracking said user on the basis of said data, said intermediate device (1) comprising:
- reception means (19) devised to receive said data from said visited switching device (3, 4);
- recording means (2) devised to record said data;
said intermediate device (1) being **characterised in that** it also comprises
- connection request means (19, 21, 22) devised to send a request to said home switching device (5) on the basis of said data;
- connection authorisation means devised to authorise a connection to said visited switching device (3, 4) on the basis of a response received following the sending of said request.

## Patentansprüche

1. Mobilfunknetz-Architektur, die zumindest ein erstes Heimnetz (9) und ein zweites Besuchsnetz (7) umfasst, wobei das Besuchsnetz (7) mindestens eine Besuchs-Vermittlungsvorrichtung (3, 4) umfasst, wobei das Heimnetz (9) mindestens eine Heim-Vermittlungsvorrichtung (5) umfasst, wobei die Besuchs-Vermittlungsvorrichtung (3, 4) dafür geeignet ist, Daten in Bezug auf einen Benutzer in dem Besuchsnetz (7) zu empfangen und die Daten an die Heim-Vermittlungsvorrichtung (5) zu senden, wobei die Heim-Vermittlungsvorrichtung (5) dafür geeignet ist, die Daten aufzuzeichnen und den Benutzer in Abhängigkeit der Daten zu authentifizieren und zu lokalisieren, wobei die Architektur eine zwischengeschaltete Vorrichtung aufweist, die Folgendes umfasst:
- Empfangsmittel (19), die für das Empfangen der Daten von der Besuchs-Vermittlungsvorrichtung (3, 4) eingerichtet sind;
- Aufzeichnungsmittel (2), die für das Aufzeichnen der Daten eingerichtet sind;
**dadurch gekennzeichnet, dass** die zwischengeschaltete Vorrichtung (1) in dem Besuchsnetz (7) angeordnet ist und Folgendes umfasst:
- Verbindungsanforderungs-Mittel (19, 21, 22), die eingerichtet sind für das Senden einer Anforderung an die Heim-Vermittlungsvorrichtung (5) ausgehend von den Daten; und
- Verbindungsfreigabe-Mittel, die eingerichtet sind für das Freigeben einer Verbindung mit der Besuchs-Vermittlungsvorrichtung (3, 4), in Abhängigkeit von einer Antwort, die durch die zwischengeschaltete Vorrichtung in Folge der Sendung der Anforderung empfangen wurde.

2. Verfahren zum Verwalten einer Mobilfunknetz-Architektur, wobei die Architektur zumindest ein erstes Heimnetz (9) und ein zweites Besuchsnetz (7) umfasst, wobei das Besuchsnetz (7) mindestens eine Besuchs-Vermittlungsvorrichtung (3, 4) umfasst, wobei das Heimnetz (9) mindestens eine Heim-Vermittlungsvorrichtung (5) umfasst, wobei die Besuchs-Vermittlungsvorrichtung (3, 4) dafür geeignet ist, Daten eines Benutzer in dem Besuchsnetz (7) zu empfangen und die Daten an die Heim-Vermittlungsvorrichtung (5) zu senden, wobei die Heim-Vermittlungsvorrichtung (5) dafür geeignet ist, die Daten aufzuzeichnen und den Benutzer in Abhängigkeit der Daten zu authentifizieren und zu lokalisieren, wobei die Architektur eine zwischengeschaltete Vorrichtung (1) aufweist, die in dem Besuchsnetz (7) angeordnet ist, wobei das Verfahren folgende Schritte, die durch die zwischengeschaltete Vorrichtung (1) durchgeführt werden, umfasst:
- Empfangen der Daten von der Besuchs-Vermittlungsvorrichtung (3, 4);
- Aufzeichnen der Daten;
wobei das Verfahren **dadurch gekennzeichnet ist, dass** es ferner die folgenden Schritte umfasst:
- Senden einer Anforderung an die Heim-Vermittlungsvorrichtung (5) ausgehend von den Daten;
- Bereitstellen einer Freigabe, an die Besuchs-Vermittlungsvorrichtung (3, 4), einer Verbindung des Benutzers mit dem Besuchsnetz (7).

3. Verfahren nach Anspruch 2, das für den Fall einer fehlgeschlagenen Authentifizierung durch die Heim-Vermittlungsvorrichtung (5) in Folge der Anforderung folgenden Schritt umfasst:
- Analysieren der im Bereich der zwischengeschalteten Vorrichtung (1) empfangenen Daten;
- Freigeben der Authentifizierung.

4. Verfahren nach Anspruch 2, das für den Fall einer fehlgeschlagenen Lokalisierung durch die Heim-Vermittlungsvorrichtung (5) in Folge der Anforderung folgenden Schritt umfasst:
- Analysieren der im Bereich der zwischengeschalteten Vermittlungsvorrichtung (1) empfangenen Daten;
- Freigeben der Lokalisierung.

5. Zwischengeschaltete Vorrichtung, die in einer Mobilfunknetz-Architektur enthalten ist, die zumindest ein erstes Heimnetz (9) und ein zweites Besuchsnetz (7) umfasst, wobei das Besuchsnetz (7) mindestens eine Besuchs-Vermittlungsvorrichtung (3, 4) umfasst, wobei das Heimnetz (9) mindestens eine Heim-Vermittlungsvorrichtung (5) umfasst, wobei die Besuchs-Vermittlungsvorrichtung (3, 4) dafür geeignet ist, Daten in Bezug auf einen Benutzer in dem Besuchsnetz (7) zu empfangen und die Daten an die Heim-Vermittlungsvorrichtung (5) zu senden, wobei die Heim-Vermittlungsvorrichtung (5) dafür geeignet ist, die Daten aufzuzeichnen und den Benutzer in Abhängigkeit der Daten zu authentifizieren und zu lokalisieren, wobei die zwischengeschaltete Vorrichtung (1) Folgendes umfasst:
- Empfangsmittel (19), die für das Empfangen der Daten von der Besuchs-Vermittlungsvorrichtung (3, 4) eingerichtet sind;
- Aufzeichnungsmittel (2), die für das Aufzeichnen der Daten eingerichtet sind;
wobei die zwischengeschaltete Vorrichtung (1) **dadurch gekennzeichnet ist, dass** sie ferner Folgendes umfasst:
- Verbindungsanforderungs-Mittel (19, 21, 22), die eingerichtet sind für das Senden einer Anforderung an die Heim-Vermittlungsvorrichtung (5) ausgehend von den Daten;
- Verbindungsfreigabe-Mittel, die eingerichtet sind für das Freigeben einer Verbindung mit der Besuchs-Vermittlungsvorrichtung (3, 4), in Abhängigkeit von einer Antwort, die in Folge der Sendung der Anforderung empfangen wurde.
